# EUROPÄISCHE PATENTSCHRIFT

(11) **EP 0 762 003 B1**
(45) Veröffentlichungstag und Bekanntmachung des Hinweises auf die Patenterteilung: **27.10.1999**
(21) Anmeldenummer: 96112930.1
(22) Anmeldetag: 12.08.1996
(51) Int. Cl.: F16D 23/06

(54) **Synchronisiereinrichtung für Schaltkupplungen, insbesondere von Schaltgetrieben für Kraftfahrzeuge**
Synchronising apparatus for change-speed gearing, especially for motor vehicle transmissions
Dispositif de synchronisation de boîtes de vitesse, notamment pour transmissions de véhicules automobiles

(30) Priorität: 24.08.1995 DE 19531155
(43) Veröffentlichungstag der Anmeldung: 12.03.1997
(73) Patentinhaber: ADAM OPEL AG, 65423 Rüsselsheim (DE)
(72) Erfinder: Jessen, Rolf, Dipl.-Ing. (TH), 65428 Rüsselsheim (DE); Oppertshäuser, Enno, 65428 Rüsselsheim (DE)
(74) Vertreter: Kümpfel, Heinz, Dipl.-Ing.

(56) Entgegenhaltungen:
- AU-A- 7 781 475
- DE-B- 1 080 413
- US-A- 2 627 955

## Beschreibung

Die Erfindung betrifft eine Synchronisiereinrichtung für Schaltkupplungen, insbesondere von Schaltgetrieben für Kraftfahrzeuge, nach dem Oberbegriff des Anspruchs 1.

Eine solche Synchronisiereinrichtung ist mit DE 26 59 448 C2 beschrieben und dargestellt. Bei dieser bekannten Ausführung sind die axialen Stirnseiten der Zähne von Schaltverzahnung und Sperrverzahnung als Dachschrägen oder Keilflächen ausgebildet, um bei axialen Schiebebewegungen ein Eingreifen der Zähne ineinander dann zu erleichtern, wenn zufällig Zahn auf Zahn steht. Die Keilflächen sind als ebene Flächen ausgebildet. Die Scheitelwinkel der Keilflächen oder Dachschrägen sind üblicherweise an allen Zähnen gleich, können jedoch nach der genannten Druckschrift an verschiedenen Zähnen auch unterschiedlich sein, wobei bevorzugt der Scheitelwinkel verlängerter Zähne an der Schaltmuffe kleiner als der unverlängerter Zähne ist. Durch die unterschiedliche Länge der Zähne an der Schaltmuffe kann der Schaltweg vorteilhaft verkürzt werden. Die ebene Form der Dachflächen an den axialen Stirnseiten der Zähne führt jedoch infolge der unvermeidlichen Toleranzen bei der Fertigung einerseits zu Kantenpressung im Fußbereich der Sperrverzahnung, was besonders bei kaltem Getriebe schwergängiges Schalten auch nach Erreichen von Gleichlauf der zu schaltenden Teile auslöst und andererseits zur partiellen Anlage der Dachflächen nur im Kopfbereich der Sperrverzahnung, so daß dann die Sperrfläche zu klein ist für eine sichere Sperrung der Schaltkupplung im unsynchronisierten Zustand und damit die Schaltung zum Kratzen neigt.

Um das Schaltverhalten einer solchen Synchronisiereinrichtung zu verbessern, insbesondere eine selbsttätige Axialbewegung der Schaltmuffe zu verhindern, wird mit DE 37 14 190 C2 vorgeschlagen, im Bereich vertiefter Zahnnuten der Schaltmuffe glatte Seitenflanken vorzusehen, die in entsprechend höhere Zähne des Synchronringes führend eingreifen. Ein Hinweis auf das Vermeiden von Kantenpressung und reduziertes Synchronisiervermögen wird jedoch nicht gegeben.

Der Erfindung liegt die Aufgabe zugrunde, eine Synchronisiereinrichtung der eingangs genannten Art dahingehend zu verbessern, daß die infolge Kantenpressung an den Dachflächen bzw. nur teilweiser Anlage der Dachflächen im Kopfbereich der Sperrverzahnung auftretenden Mängel, nämlich schwergängiges Schalten bzw. unzureichendes Synchronisieren, auch bei Vorliegen der üblichen Fertigungstoleranzen nicht auftreten.

Erfindungsgemäß wird diese Aufgabe durch die kennzeichnenden Merkmale des Anspruches 1 gelöst.

Infolge der Balligkeit der einen, z. B. auf dem Synchronring befindlichen, Dachfläche, liegt deren Berührungspunkt auch bei den toleranzbedingten maßlichen Abweichungen immer in einem definierten mittleren Bereich der ebenen Dachfläche, z. B. der der Innenverzahnung der Schaltmuffe.

Ein Durchschalten ist somit ohne Kraftsteigerung und Zeitverzug möglich. Es ergibt sich für alle praktischen Toleranzfälle die vorgesehene Sperrsicherheit.

Die vorgeschlagenen Maßnahmen sind darüber hinaus ohne zusätzliche Kosten realisierbar, wenn der Synchronisierring die balligen Dachflächen trägt und in üblicher Weise spanlos (z. B. durch Sintern, Schmieden, Gießen) hergestellt wird.

Bei Ausführung der balligen Flächen als Kugelfläche können auch die Werkzeugkosten relativ gering gehalten werden.

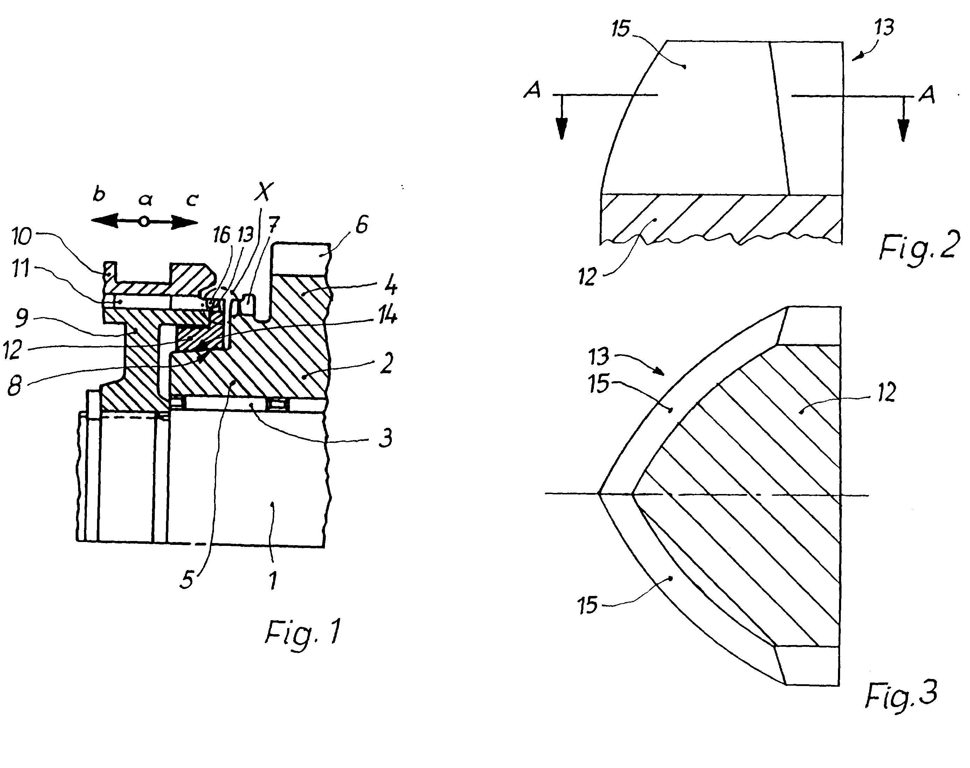

Ein Ausführungsbeispiel der Erfindung ist nachstehend anhand einer Zeichnung näher beschrieben. Es zeigen
- Fig. 1:: einen Schnitt durch eine Synchronisiereinrichtung;
- Fig. 2:: eine Einzelheit bei X in Figur 1 in vergrößertem Maßstab;
- Fig. 3:: einen Schnitt entlang der Linie A-A in Figur 2.

Auf einer Welle 1 eines Schaltgetriebes ist Zahnrad 2 mittels Nadellager 3 drehbar gelagert. Das Zahnrad 2, gebildet aus einer Radscheibe 4 und einem Kupplungskörper 5, hat am äußeren Umfang der Radscheibe 4 eine Verzahnung 6, mit welcher es in Eingriff mit einem nicht dargestellten Gegenzahnrad steht und mit diesem ein Zahnradpaar bildet sowie am Kupplungskörper 5 eine Schaltverzahnung 7 und eine keglige Reibfläche 8. Mit der Welle 1 drehfest und unverschiebbar verbunden ist eine Führungsnabe 9, auf deren äußeren Umfang eine Schaltmuffe 10 unverdrehbar, aber axial aus einer Mittellage a verschiebbar in die Richtungen der Pfeile b und c gelagert ist. Die Schaltmuffe 10 hat eine Innenverzahnung 11, welche beim Verschieben der Schaltmuffe 10 in Richtung des Pfeiles c über die Schaltverzahnung 7 greift. Die Führungsnabe 9 führt einen Synchronisierring 12, der mit einer dem Durchmesser der Schaltverzahnung 7 entsprechenden Sperrverzahnung 13 und einer der Reibfläche 8 angepaßten und mit ihr zusammenwirkenden Reibfläche 14 versehen ist.

Der Synchronring 12 ist gegenüber der Führungsnabe 9 bzw. der Schaltmuffe 10 in beiden Drehrichtungen um die Teilung eines halben Zahnes der Sperrverzahnung 13 verdrehbar und im übrigen gegenüber der Führungsnabe 9 und dem Kupplungskörper 5 axial verschiebbar. Sowohl die Sperrverzahnung 13 des Synchronringes 12 als auch die Innenverzahnung 11 der Schaltmuffe 10 sind an den aneinander zugekehrten Stirnseiten mit Dachflächen 15 bzw. 16 versehen. Die Dachflächen 16 der Innenverzahnung 11 sind in üblicher Weise als ebene Flächen ausgebildet. Die Dachflächen 15 der Sperrverzahnung 13 dagegen sind als dreidimensional ballige Flächen gestaltet. Die Form dieser Flächen ist vorteilhaft ein Kugelausschnitt, kann jedoch auch als andere Form, wie z. B. als Ellipsoidausschnitt, gebildet sein.

Beim Schaltvorgang wird das Zahnrad 2 über die Schaltmuffe 10 und die Führungsnabe 9 drehstarr mit der Welle 1 verbunden. Dazu wird die Schaltmuffe 10 mittels einer nicht dargestellten Schaltgabel aus der Mittelstellung a in Richtung des Pfeiles c verschoben, wobei auch der Synchronisierring 12 solange mitgenommen wird, bis er mit seiner konischen Reibfläche 14 an der gleichfalls konischen Reibfläche 8 des Kupplungskörpers 5 anliegt. Besteht zwischen der Welle 1 und dem Zahnrad 2 keine Drehzahldifferenz, dann kann die Innenverzahnung 11 der Schaltmuffe 10 ohne größeren Widerstand über die Sperrverzahnung 13 des Synchronisierringes 12 gleiten, wobei durch die punktuelle Anlage der gewölbten Dachflächen 15 der Sperrverzahnung 13 an den ebenen Dachflächen 16 der Innenverzahnung 11 ein Verkanten oder Verhaken sicher vermieden wird. Die Innenverzahnung 11 kann so die Schaltverzahnung 7 am Kupplungskörper 5 erreichen und in diese eingreifen. Damit ist der Schaltvorgang beendet.

Besteht zwischen der Welle 1 und dem Zahnrad 2 eine Drehzahldifferenz, dann wird der Synchronisierring 12 durch das Reibmoment an den Reibflächen 8 und 14 mitgenommen und um eine halbe Zahnteilung der Sperrverzahnung 13 gegenüber der Schaltmuffe 10 verdreht. Der Schaltweg bleibt der Schaltmuffe 10 somit solange versperrt, bis synchrone Drehzahlen zwischen der Welle 1 und dem Zahnrad 2 hergestellt sind. Erst dann kann die Innenverzahnung 11 der Schaltmuffe 10 mit ihren Dachflächen 16 die Sperrverzahnung 13 des Synchronisierringes 12 an deren sphärisch gewölbten Dachflächen 15 so weit verdrehen, daß die Innenverzahnung 11 über die Sperrverzahnung 13 zu der Schaltverzahnung 7 gleiten kann. Durch die dreidimensionale ballige Form der Dachflächen 15 wird auch bei relativ großen Fertigungstoleranzen eine Berührungszone zwischen den Dachflächen 15 und den Dachflächen 16 der Innenverzahnung 11 eingehalten, die mit sehr guter Annäherung der theoretischen Berührungszone in der Mitte der Dachflächen 15, 16 entspricht. Die Synchronisation erfolgt somit in gewünschtem Maße, und ein Verhaken der Schaltung tritt nicht ein.

Die Erfindung ist nicht auf das beschriebene Beispiel beschränkt, sie ist vielmehr bei allen Synchronisiereinrichtungen anwendbar, bei denen eine Sperrverzahnung mit Dachflächen an der Stirnseite Verwendung findet. Dabei ist es auch möglich, die ballige Form der Dachflächen an der Innenverzahnung der Schaltmuffe vorzusehen und die Dachflächen der Sperrverzahnung dagegen als ebene Flächen auszubilden.

## Patentansprüche

1. Synchronisiereinrichtung für Schaltkupplungen, insbesondere von Schaltgetrieben für Kraftfahrzeuge, mit zumindest einem durch axiales Verschieben einer mit einer Welle (1) über eine Führungsnabe (9) drehstarr verbundenen Schaltmuffe (10) mit Innenverzahnung (11) in den Kraftfluß ein- bzw. aus ihm ausschaltbaren Räderpaar, an dessen mit der Schaltmuffe (10) gleichachsigem Zahnrad (2) ein Kupplungskörper (5) mit einer äußeren Schaltverzahnung (7) starr verbunden ist sowie mit einem Synchronisierring (12), der am Umfang mit einer der Innenverzahnung (11) der Schaltmuffe (10) adäquaten, Sperrzähne aufweisenden Sperrverzahnung (13) versehen ist, wobei der Synchronisierring (12) in Umfangsrichtung mit der Schaltmuffe (10) oder deren Führungsnabe (9) in formschlüssiger, jedoch um eine halbe Zahnteilung der Sperrverzahnung (13) verdrehbarer Verbindung steht und mit dem Kupplungskörper (5) durch Verschieben auf den Kupplungskörper (5) zu in reibschlüssige Verbindung bringbar ist, die Sperrzähne der Sperrverzahnung (13) sowie die Innenverzahnung (11) der Schaltmuffe (10) mit gegeneinander gerichteten Dachflächen (15, 16) versehen sind und wobei bei unterschiedlicher Drehzahl von Welle (1) und Zahnrad (2) der Synchronisierring (12) gegenüber der Schaltmuffe (10) so verdreht wird, daß seine Sperrverzahnung (13) ein Verschieben der Innenverzahnung (11) auf die Schaltverzahnung (7) verhindert, **dadurch gekennzeichnet,** daß die Dachflächen (15, 16) entweder der Sperrverzahnung (13) oder der Innenverzahnung (11) dreidimensional ballig geformt sind.

2. Synchronisiereinrichtung nach Anspruch 1, **dadurch gekennzeichnet,** daß die balligen Dachflächen (15) Kugelflächen sind.

3. Synchronisiereinrichtung nach Anspruch 1 und 2, **dadurch gekennzeichnet,** daß während des Schaltvorganges der Berührungspunkt der balligen Dachflächen (15) im mittleren Bereich der vorzugsweise ebenen Dachflächen (16) liegt.

4. Synchronisiereinrichtung nach mindestens einem der Ansprüche 1 bis 3, **dadurch gekennzeichnet**, daß das Bauteil mit den balligen Dachflächen (15) spanlos hergestellt ist.

5. Synchronisiereinrichtung nach mindestens einem der Ansprüche 1 bis 4, **dadurch gekennzeichnet**, daß die Sperrverzahnung (13) des Synchronisierringes (12) die dreidimensional ballig geformten Dachflächen (15) aufweist.

## Claims

1. Synchronising device for clutches, in particular manual transmissions for motor vehicles, with at least one pair of gears which can be engaged in the power flux or disengaged from it by axial displacement of an operating sleeve (10) with an internal tooth system (11), which is connected to a shaft (1) non-rotatably by a guide hub (9), wherein a coupling body (5) with an external operating tooth system (7) is rigidly connected to the gear (2) of the pair of gears which is coaxial with the operating sleeve (10), and with a synchronising ring (12) which at the circumference is provided with a locking tooth system (13) which mates with the internal tooth system (11) of the operating sleeve (10) and comprises locking teeth, wherein the synchronising ring (12) in the circumferential direction is connected to the operating sleeve (10) or the guide hub (9) thereof in form-locking relationship but so as to be rotatable by half the tooth pitch of the locking tooth system (13) and can be frictionally connected to the coupling body (5) by sliding on the coupling body (5), the locking teeth of the locking tooth system (13) and the internal tooth system (11) of the operating sleeve (10) are provided with roof surfaces (15, 16) directed towards each other, and wherein when the speeds of the shaft (1) and gear (2) are different the synchronising ring (12) is rotated relative to the operating sleeve (10) in such a way that its locking tooth system (13) prevents displacement of the internal tooth system (11) towards the operating tooth system (7), characterised in that the roof surfaces (15, 16) of either the locking tooth system (13) or the internal tooth system (11) are cambered three-dimensionally.

2. Synchronising device according to claim 1, characterised in that the cambered roof surfaces (15) are spherical surfaces.

3. Synchronising device according to claims 1 and 2, characterised in that, during the shift process, the point of contact of the cambered roof surfaces (15) lies in the middle region of the preferably planar roof surfaces (16).

4. Synchronising device according to one or more of claims 1 to 3, characterised in that the component with the cambered roof surfaces (15) is manufactured without cutting.

5. Synchronising device according to one or more of claims 1 to 4, characterised in that the locking tooth system (13) of the synchronising ring (12) comprises the three-dimensionally cambered roof surfaces (15).

## Revendications

1. Dispositif de synchronisation pour accouplements temporaires, notamment de boîtes de vitesses de véhicules automobiles, comprenant au moins un couple de roues dentées qui peut être amené en prise et hors prise par déplacement axial d'un manchon d'accouplement (10) pourvu d'une denture intérieure (11) et lié de manière rigide en torsion à un arbre (1) par l'intermédiaire d'un moyeu de guidage (9), couple de roues dans lequel la roue dentée (2) qui est coaxiale avec le manchon d'accouplement (10) est liée rigidement à un élément de couplage (5) pourvu d'une denture d'accouplement (7) extérieure ainsi qu'une bague de synchronisation (12) qui est pourvue sur son pourtour d'une denture de verrouillage (13) avec des dents de verrouillage adaptées à la denture intérieure (11) du manchon d'accouplement (10), la bague de synchronisation (12), dans la direction tangentielle, étant en liaison par complémentarité de formes, mais avec possibilité de rotation d'un demi pas de la denture de verrouillage (13), avec le manchon d'accouplement (10) ou le moyeu de guidage (9) de celui-ci et pouvant être amenée en liaison de frottement avec l'élément de couplage (5) par coulissement en direction de l'élément de couplage (5), les dents de la denture de verrouillage (13) et la denture intérieure (11) du manchon d'accouplement (10) étant pourvues de surfaces prismatiques (15, 16) tournées l'une vers l'autre et, en cas d'écart de vitesse de rotation entre l'arbre (1) et la roue dentée (2), la bague de synchronisation (12) tournant par rapport au manchon d'accouplement (10) de telle sorte que sa denture de verrouillage (13) empêche un déplacement de la denture intérieure sur la denture d'accouplement (7), caractérisé par le fait que les surfaces prismatiques (15, 16) de la denture de verrouillage (13) ou de la denture intérieure (11) sont bombées dans les trois dimensions.

2. Dispositif de synchronisation selon la revendication 1, caractérisé par le fait que les surfaces prismatiques (15) bombées sont des surfaces sphériques.

3. Dispositif de synchronisation selon les revendications 1 et 2, caractérisé par le fait que pendant le processus de changement de vitesse le point contact des surfaces prismatiques sphériques (15) se situe dans la région médiane des surfaces prismatiques (16) de préférence planes.

4. Dispositif de synchronisation selon au moins une des revendications 1 à 3, caractérisé par le fait que la pièce portant les surfaces prismatiques (15) est fabriquée sans enlèvement de copeaux.

5. Dispositif de synchronisation selon au moins une des revendications 1 à 4, caractérisé par le fait que la denture de verrouillage (13) de la bague de synchronisation (12) présente les surfaces prismatiques (15) bombées dans les trois dimensions.
